# EUROPEAN PATENT SPECIFICATION

(11) **EP 4 501 593 B1**
(45) Date of publication and mention of the grant of the patent: **15.04.2026**
(21) Application number: 23382803.7
(22) Date of filing: 01.08.2023
(51) Int. Cl.: B29C 65/02, B29C 65/78, B65B 51/30, B65B 9/207

(54) **PACKAGING MACHINE**
VERPACKUNGSMASCHINE
MACHINE D'EMBALLAGE

(43) Date of publication of application: 05.02.2025
(73) Proprietor: Ulma Packaging, S.Coop., 20560 Oñati (ES)
(72) Inventor: OTXOA-AIZPURUA CALVO, Alberto, 20560 Oñati (ES)
(74) Representative: Galbaian S.Coop.

(56) References cited:
- US-B2- 11 383 457

## Description

### TECHNICAL FIELD

The present invention relates to packaging machines, with which products, preferably foodstuffs, are packaged.

### PRIOR ART

Different types of packaging machines are known, such as vertical packaging machines, horizontal packaging machines, thermo-forming machines, thermo-sealing machines, or packaging machines that create a vacuum in a bag containing a product inside and seal the bags (also known as vacuum chamber machines).

In all of them, a plurality of operations are performed during the packaging of a product, and which operations are performed or how the operations to be performed depend on the type of packaging machine. Among the different stages that can be carried out, there are, for example, shaping a film, sealing a station to generate a vacuum, sealing a lid film to a base film or a tray, making a longitudinal seal to generate a film tube, or making a transversal seal to seal and close transversally such a film tube, for example. In all or many of these operations it is necessary to cause the displacement of at least one linearly displaceable actuating element to carry out the required operation.

Depending on the operation to be carried out and/or the packaging machine, it may be sufficient to displace only one actuating element. The following is a brief description of some of the possible examples:
- Forming operation in some thermoforming packaging machines, in which only one actuating element is displaced to give the required shape to a sheet;
- Sealing operation of some thermo-sealing and thermo-forming packaging machines, in which an actuating element is displaced to press a lidding film serving as the lid of the final package against a tray or base film (or to press the tray or base foil against the lidding film), to seal the lidding film to the tray or base film; and
- Closing operation prior to air extraction in some of the packaging machines known as vacuum hoods, in which an actuating element is displaced to tightly close a vacuum chamber where the vacuum operation is carried out.

In other cases, in order to carry out the corresponding operation, two opposing actuating elements are displaced at the same time. The following is a brief description of some of the possible examples:
- When performing a sealing operation, for example, the sealing operation can be performed between two opposing actuating elements. In some cases, these actuating elements clamp a film tube together to generate the seal (case of at least some vertical and horizontal packaging machines) and in other cases, they cause a previously formed lid film to be clamped on a tray or a base film on which the product to be packaged is arranged, in order to seal the lid film to the tray or base film (more general case of thermoforming packaging machines). In this example, the two actuating elements are therefore displaced in opposite directions simultaneously for the sealing operation. When sealing is to be carried out, the two actuating elements are first displaced in such a way that they move towards each other and then in the opposite direction (away from each other) when sealing is completed.

Depending on the packaging machine and/or the operation to be performed, such a packaging machine may comprise two actuation elements analogous to those described in terms of displacement requirements but configured to perform a different operation. In the case of a vertical machine for example, two actuation elements are used opposite each other as, for example, product compactors, to ensure that the product is correctly positioned inside the film tube before and/or during transverse sealing of the film tube.

EP3674222A1 describes various operations of a packaging machine. This packaging machine comprises a sealing assembly with a first actuating element and a second actuating element facing each other, and a drive configured to cause simultaneous displacement of the actuating elements. The drive comprises a drive support, a motor assembly with a stator attached to the drive support and a rotor with a longitudinal axis. The actuating elements are attached to the drive support with freedom to move away from or towards each other by the action of the drive motor assembly and are also attached to the rotor of the drive such that rotation of the rotor of the drive causes simultaneous displacement of both sealing elements relative to the drive support. The connection between the actuating elements and the rotor is made in such a way that the rotation of the rotor causes the simultaneous displacement of both actuating elements in different directions.

### DISCLOSURE OF THE INVENTION

The object of the invention is to provide a packaging machine as defined in the claims.

The packaging machine comprises an actuation assembly that is configured to take part in an operation during product packaging and that is associated with a reference support of the machine. The actuation assembly comprises at least one linearly displaceable actuation element and a drive configured to cause linear displacement of the actuation element.

The drive comprises a motor assembly which is attached to the reference support and which is associated with the actuating element such that when driven, it causes linear displacement of the actuating element.

The drive comprises a first linkage mechanism linking the actuation element to a rotor of the motor assembly and a second linkage mechanism linking the actuation element to a stator of the motor assembly. The motor assembly is attached to the reference support such that, when the motor assembly is driven, the stator and the rotor rotate relative to the reference support in opposite directions of rotation and said rotations cause the linear displacement of the actuation element thanks to the linkage mechanisms.

When actuation of the actuation element is required, the rotor of the drive motor assembly is caused to rotate relative to the stator, and in response to the force exerted by the rotating rotor, the stator rotates in the opposite direction. As the actuation element is connected to the stator and the rotor with the corresponding linkage mechanisms, both rotations take part in the displacement of the actuation element, thus requiring less power consumption of the motor assembly to generate the same thrust on the actuation element compared to prior art solutions where the actuation element is only associated with the rotor. This implies a reduction in the energy consumed by the actuation assembly and, therefore, allows opting for a more compact and economical motor assembly, leading to a reduction in the cost of generating each pack and to a cheaper packaging machine.

These and other advantages and features of the invention will become apparent in view of the figures and the detailed description of the invention.

### DESCRIPTION OF THE DRAWINGS

Figure 1 shows an embodiment of the packaging machine according to the invention.
Figure 2 is a perspective view of a drive associated with an actuating element of an embodiment of a packaging machine according to the invention.
Figure 3 is another view of the actuator and actuation element of figure 2.
Figure 4 is the same view of the actuator as in Figure 3, with the actuating element in a different position.
Figure 5 shows in section a drive coupled to an actuating element of an embodiment of a packaging machine according to the invention.
Figure 6 shows a view from the side of a drive of an embodiment of the packaging machine of the invention comprising an actuation assembly with two actuating elements facing each other.
Figure 7 shows a view from another side of the drive of figure 6, with the actuating elements in a different position.
Figure 8 shows a perspective view of a drive of the machine of figure 1, associated with two actuating elements.
Figure 9 shows in section the two drives for one actuation assembly of the machine in figure 1.
Figure 10 shows the two drives of figure 9 in perspective.

### DETAILED DISCLOSURE OF THE INVENTION

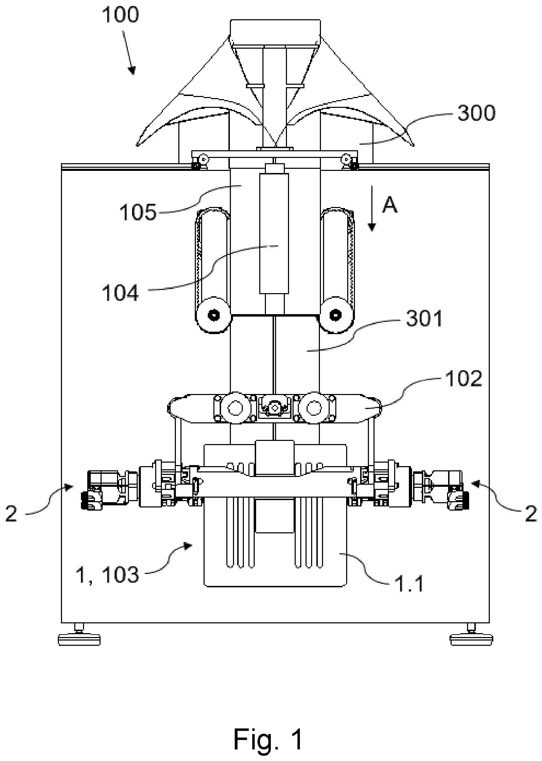

Figure 1 shows an embodiment of a packaging machine 100, which is adapted for packaging products and which is configured to be able to perform at least one operation for this purpose, and comprises at least one actuation assembly 1 configured to take part in at least one such operation. The actuation assembly 1 comprises a linearly displaceable actuation element 1.1 and a drive 2 configured to cause linear displacement of said actuation element 1.1 so that said actuation assembly 1 takes part in the corresponding operation during packaging of products.

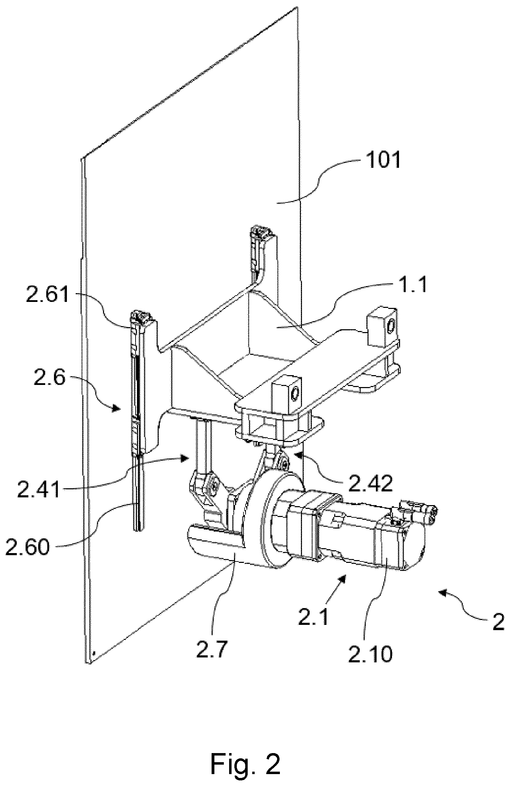

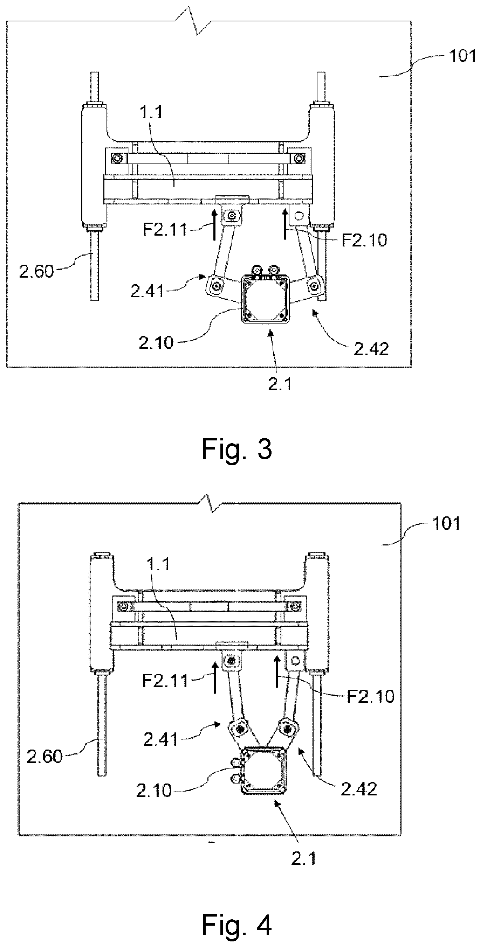

The drive 2 comprises a motor assembly 2.1 (see figures 2 and 3) which is associated with the actuation element 1.1 in such a way that when said motor assembly 2.1 is driven it causes the linear displacement of said actuation element 1.1. Said actuation assembly 1 is attached to a reference support 101 of the machine 100, in such a way that said motor assembly 2.1 is supported in the machine 100. Depending on the type of packaging machine 100 said reference support 101 may be the frame of the machine 100 itself, although it could also be a movable element of the machine 100. The actuation element 1.1 is preferably associated with the reference support 101, it being linearly displaceable with respect to said reference support 101 when it displaces (regardless of whether in some embodiments the reference support 101 moves or not).

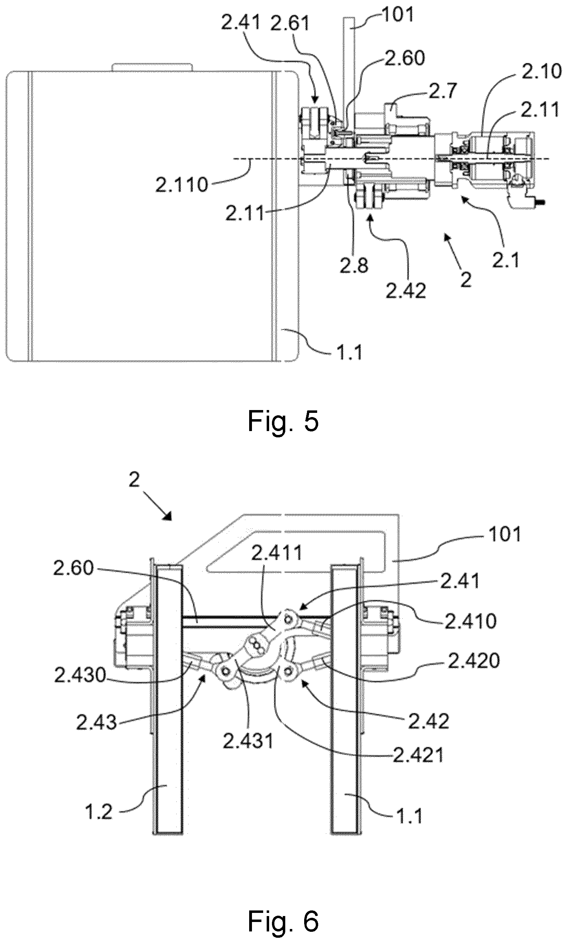

The drive 2 comprises a first linkage mechanism 2.41 linking the actuation element 1.1 to a rotor 2.11 of the motor assembly 2.1 (see figure 5) and a second linkage mechanism 2.42 linking said actuation element 1.1 to a stator 2.10 of said motor assembly 2.1. The motor assembly 2.1 is attached to the reference support 101 in such a way that, when said motor assembly 2.1 is driven, the stator 2.10 and the rotor 2.11 rotate with respect to the reference support 101 in opposite directions of rotation, and it is these rotations which cause the linear displacement of the actuation element 1.1 due to the linkage mechanisms 2.41 and 2.42.

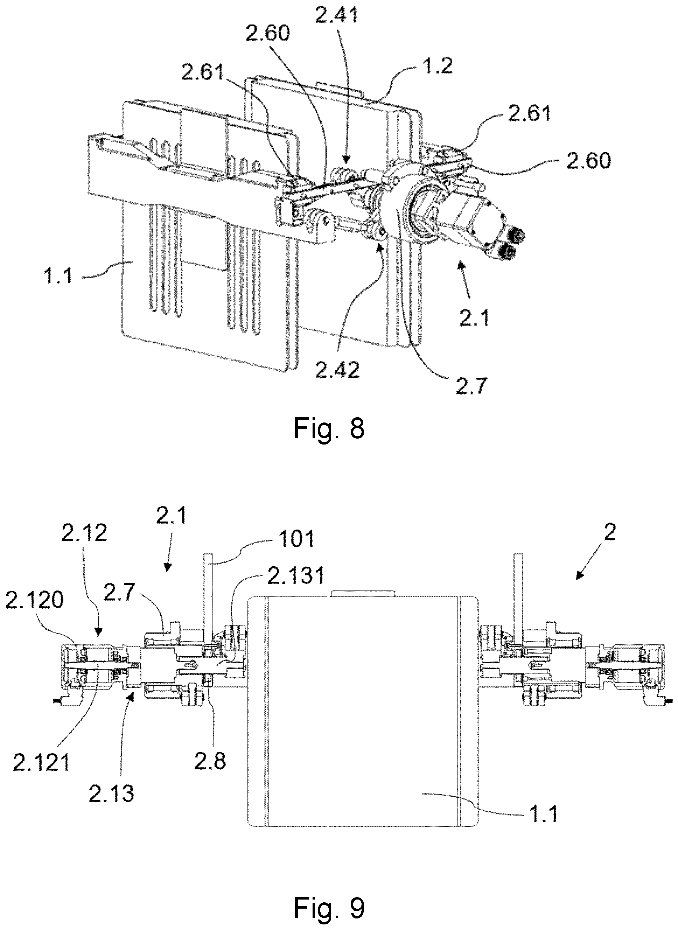

At least one of the elements of the motor assembly 2.1 between the stator 2.10 and the rotor 2.11 is connected to the reference support 101, this connection being the one which establishes the connection between the motor assembly 2.1 and the reference support 101. Said element (stator 2.10 and/or rotor 2.11) is connected to said reference support 101 with freedom of rotation, preferably by means of a bearing 2.7 or 2.8. Preferably it is the stator 2.10 which is freely rotatably attached to the reference support 101, although it could be both elements (stator 2.10 and rotor 2.11) which are freely rotatably attached to the reference support 101 (see figures 5 and 9 for example), or only the rotor 2.11.

The actuation element 1.1 is linearly displaceable in a first direction and in a second direction opposite to said first direction, and the two linkage mechanisms 2.41 and 2.42 are configured to exert a simultaneous respective thrust F2.10, F2.11 on said actuation element 1.1 in the same direction, between said first direction and said second direction, when the motor assembly 2.1 is driven, as shown in figures 3 and 4 where a linear displacement of the actuation element 1.1 is represented. In this way both rotations, that of the rotor 2.11 and that of the stator 2.10, contribute to the displacement of said actuation element 1.1, without one opposing the other despite being rotations in opposite directions.

Preferably each linkage mechanism 2.41 and 2.42 is a connecting rod-crank mechanism as will be described below. In the context of the invention a connecting rod-crank mechanism is to be interpreted as a mechanism comprising at least one connecting rod and one crank, or a mechanism comprising at least one eccentric and one connecting rod, in either case transforming a rotational displacement into a linear displacement.

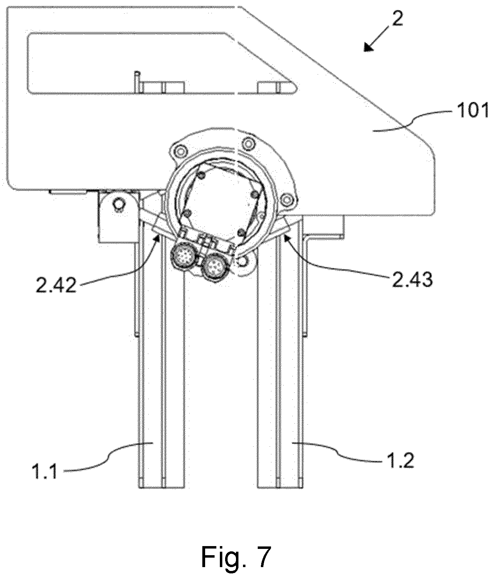

In some embodiments, the machine 100 comprises at least one actuation assembly 1 with a second actuation element 1.2 linearly displaceable and facing the first actuation element 1.1, as depicted in the examples of Figures 6 and 7. Preferably said second actuation element 1.2 is attached with freedom of linear displacement to the reference support 101.

In cases where the actuation assembly 1 comprises a first actuating element 1.1 and a second actuating element 1.2, the actuator 2 is configured to cause the two actuating elements 1.1 and 1.2 to displace simultaneously, preferably in opposite directions (so as to move towards or away from each other during such movement).

The drive 2 comprises a third linkage mechanism 2.43 for linking the second actuation element 1.2 to the motor assembly 2.1 (to the rotor 2.11, as depicted in the figures, or to the stator 2.10), to cause linear displacement of the second actuation element 1.2. The third linkage mechanism 2.43 is configured to exert a thrust on the second actuation element 1.2 when actuation of the motor assembly 2.1 is caused, which is in a direction opposite to the direction of the thrusts F2.10 and F2.11 exerted on the first actuation element 1.1 when the actuation elements 1.1 and 1.2 move in opposite directions. In this way, when a linear displacement of said actuating elements 1.1 and 1.2 is caused, said actuating elements 1.1 and 1.2 comprise a relative displacement between them to perform the corresponding operation such that the distance between them is reduced (to clamp a sheet between them, for example) or such that said distance is increased (once said operation has been completed).

Although different examples of possible actuation assemblies have been described previously, an example of an actuation assembly 1 with two actuation elements 1.1 and 1.2 is briefly described below with the aid of the figures. This example, and those previously described (both for actuation assemblies with two actuation elements and for actuation assemblies with only one actuation element), is in no way limiting and the machine can comprise 100 actuation assemblies not described in these examples.

In some embodiments, such as the case of the machine shown in figure 1, the machine 100 is adapted to generate the packaging from a film 300 which is fed continuously or intermittently and given a tubular shape. This is the case for vertical packaging machines in which, by means of a hollow forming tube 105 having a vertical central axis or with an inclination of less than 90° with respect to the vertical, the sheet 300 (which surrounds said forming tube 105) is given the tubular shape, or it is also the case for horizontal packaging machines whose tubular shaped sheet extends horizontally (not shown in the figures), for example. In these embodiments, the machine 100 comprises a longitudinal sealing assembly 104, for sealing together longitudinal ends of the tubular shaped foil to form a foil tube 301. The machine 100 further comprises a transversely sealing assembly 102 downstream of the longitudinal sealing assembly 104 in a feed direction A of the foil tube 301, for at least transversely sealing the film tube 301 and generating a separate packaging of the film tube 301 downstream of said transverse sealing assembly 102. The transverse sealing assembly 102 comprises two sealing tools facing each other and moving simultaneously towards each other for sealing and away from each other after sealing. Said transverse sealing assembly 102 can thus be an actuating assembly in the context of the invention, the two sealing tools being two actuating elements 1.1 and 1.2.

In the context of the invention, an actuating element 1.1 may thus correspond, depending on the embodiment of the machine 100, to a lower tool or an upper tool of a forming station; or to a lower tool or an upper tool of a sealing station; with a moving device of, for example, a sealing station of a continuous vertical or horizontal packaging machine whose jaw moves with the film tube while sealing, or of a forming, sealing or cutting station of a continuous thermoforming machine whose actuation is carried out while the base film moves; or with at least one tool which seals off a chamber, to cite a few examples.

In vertical packaging machines 100 such as the one shown in Figure 1, the tubular shaped film surrounds the hollow forming tube 105 and the product to be packaged is supplied through the hollow forming tube 105. The product is disposed on one end of the film tube 301 sealed by the transverse sealing assembly 102. The machine 100 may further comprise an additional assembly downstream of the transverse sealing assembly 102 in the forward direction A of the film tube 301, said additional assembly 103 comprising two facing elements which move together, to compact the product and reduce the volume of the package to be generated and/or to ensure a correct positioning of the same within the final package. Said additional assembly 103 may thus serve as an actuation assembly 1 in the context of the invention, the two elements of said additional assembly 103 being two actuation elements 1.1 and 1.2.

Hereinafter, for the sake of clarity an actuation assembly 1 and two actuation elements 1.1 and 1.2 are referred to, but as already described, the invention could include at least one actuation assembly with only one actuation element 1.1.

The motor assembly 2.1 may comprise, for example, a motor with a motor rotor and a motor stator; or, as shown in the figures, a motor 2.12 with a motor rotor 2.121 and a motor stator 2.120, and an additional element 2.13 attached to the motor stator 2.120 and with an output shaft 2.131 associated with the motor rotor 2.121. The additional element may be a gearbox, in which case the motor assembly 2.1 would be a geared motor, or it may be a geared motor.120 and with an output shaft 2.131 associated with the motor rotor 2.121. The additional element may be a gearbox, in which case the motor assembly 2.1 would be a geared motor, or it may be a gearbox, in which case the motor assembly 2.1 would be a geared motor.

Rotor 2.11 of motor assembly 2.1 corresponds to the assembly formed by the motor rotor 2.121 of a motor and, if any, associated parts, e.g., the output shaft 2.131 of additional element 2.13, and stator 2.10 of motor assembly 2.1 corresponds to the assembly formed by the motor stator 2.120 of a motor and, if any, associated parts, e.g., a housing or stator of additional element 2.13.

Preferably the stator 2.10 of the motor assembly 2.1 of the drive 2 is attached to the reference support 101 by means of a bearing 2.7 when attached to said reference support 101, so that said stator 2.10 is attached with freedom of rotation in a simple manner. As a rule, a bearing 2.7 consists of two concentric cylinders, separated by a freely rotating ring of rollers or balls, one of said cylinders being attached to the reference support 101 and the other cylinder being attached to the corresponding element of the motor assembly 2.1, to the stator 2.10 according to an example, preferably to a housing (or stator) of the motor 2.12 or, if any, of the additional element 2.13, as depicted in figure 9.

Preferably each linkage mechanism 2.41, 2.42 and 2.43 is a connecting rod-crank mechanism. Thus, the first actuating element 1.1 is attached to the stator 2.10 by a first connecting rod-crank assembly 2.41 and to the rotor 2.11 by a second connecting rod-crank mechanism 2.42, and the second actuating element 1.2 is attached to the rotor 2.11 by a third connecting rod-crank assembly 2.43. The element of a connecting rod-crank mechanism 2.41, 2.42 and 2.43 attached to the corresponding actuation element 1.1 or 1.2 is the connecting rod 2.410, 2.420 and 2.430, the element attached to the motor assembly 2.1 being the crank 2.411, 2.421 and 2.431.

Preferably the length of the connecting rods 2.410 and 2.420 of the first linkage mechanism 2.41 and of the second linkage mechanism 2.42 is the same, and the length of the cranks 2.411 and 2.421 of the first linkage mechanism 2.41 and of the second linkage mechanism 2.42 is the same. Preferably, as is the case in the embodiment shown in the figures, the length of the connecting rods 2.410, 2.420 and 2.430 of all connecting rod-crank mechanisms 2.41, 2.42 and 2.43 is the same, and preferably the length of the cranks 2.411, 2.421 and 2.431 of all connecting rod-crank mechanisms 2.41, 2.42 and 2.43 is the same. The equal lengths ensure in a simple way that the displacements of both operating elements 1.1 and 1.2 are equal (same distance, speed and acceleration).

Preferably the actuator 2 comprises a guiding assembly 2.6 configured to guide the displacement of the actuation elements 1.1 and 1.2 (or of the actuation element 1.1 in case the corresponding actuation assembly 1 has only one actuation element 1.1), preferably with respect to the reference support 101 (see figure 8), said actuation elements 1.1 and 1.2 (or said actuation element 1.1) being attached to said guiding assembly 2.6 with freedom of displacement. The guiding assembly 2.6 comprises a guide 2.60 extending along the direction of travel of the actuation elements 1.1 and 1.2 (or of the actuation element 1.1) and a respective guiding element 2.61 associated with each actuation element 1.1 and 1.2 and cooperating with said guide 2.60 during the travel of the respective actuation element 1.1 and 1.2. The guide 2.60 of the guiding assembly 2.6 is preferably attached to the reference support 101. The guiding element 2.61 may be a slide as shown in the examples of the figures or a bushing (in the case where the guide 2.60 is a column for example), for example.

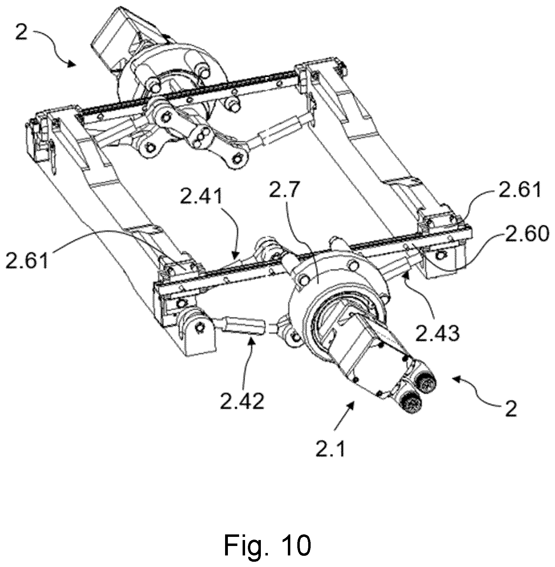

In some embodiments, preferably in some embodiments where the machine 100 comprises two actuation elements 1.1 and 1.2, the machine 100 may comprise a first drive 2 and a second drive 2 for the same actuation assembly 1 (see figures 9 and 10 by way of example), such that the force required to move the actuation elements 1.1 and 1.2 of said actuation assembly 1 is distributed between the respective motor assemblies 2.1 of the two drives 2, and blocking of the actuation elements 1.1 and 1.2 due to, for example, unequal load distribution is also prevented.

## Claims

1. Packaging machine comprising an actuation assembly (1), the actuation assembly (1) being configured to take part in an operation during packaging of products and being associated with a reference support (101) of the machine (100), the actuation assembly (1) comprising at least one actuation element (1.1) linearly displaceable with respect to the reference support (101) and at least one drive (2) configured to cause said linear displacement of the actuation element (1.1), the drive (2) comprising a motor assembly (2.1) which is joined to the reference support (101) and which is associated with said actuation element (1.1) such that, when the motor assembly (2.1) is driven, said motor assembly (2.1) causes the linear displacement of said actuating element (1.1), **characterised in that** the drive (2) comprises a first linkage mechanism (2.41) connecting the actuating element (1.1) to a rotor (2.11) of the motor assembly (2.1), and a second linkage mechanism (2.42) connecting said actuating element (1.1) to a stator (2.10) of said motor assembly (2.1), the motor assembly (2.1) being attached to the reference support (101) in such a way that, when said motor assembly (2.1) is driven, the stator (2.10) and the rotor (2.11) rotate with respect to the reference support (101) in opposite directions of rotation and said rotations cause the linear displacement of the actuation element (1.1).

2. Packaging machine according to claim 1, wherein the actuation element (1.1) is linearly displaceable in a first direction and in a second direction opposite to said first direction, the two linkage mechanisms (2.41, 2.42) being configured to exert a simultaneous thrust (F2.10, F2.11) on said actuation element (1.1) in the same direction, between said first direction and said second direction, when the motor assembly (2.1) is driven.

3. Packaging machine according to claim 1, wherein the actuation assembly (1) comprises a second actuation element (1.2) linearly displaceable and facing the first actuation element (1.1), the drive (2) being configured to cause simultaneous displacement of the two actuation elements (1.1, 1.2), and said drive (2) comprising a third linkage mechanism (2.43) for connecting the second actuating element (1.2) to the stator (2.10) or to the rotor (2.11) of the motor assembly (2.1) of the drive (2).

4. Packaging machine according to claim 3, wherein the first actuation element (1.1) is linearly displaceable in a first direction and in a second direction opposite to said first direction, the two linkage mechanisms (2.41, 2.42) being configured to exert a thrust (F2,10, F.211) simultaneously on said actuating element (1.1) in the same direction, between said first direction and said second direction, when the motor assembly (2.1) is driven, and the third linkage mechanism (2.43) is configured to exert a thrust on the second actuating element (1.2) in the opposite direction to the direction of the thrusts (F2.10, F2.11) exerted on the first actuating element (1.1), when the motor assembly (2.1) is driven.

5. Packaging machine according to claim 3 or 4, wherein the third linkage mechanism (2.43) connects the second actuating element (1.2) to the rotor (2.11) of the motor assembly (2.1) of the drive (2).

6. Packaging machine according to any of claims 1 to 5, wherein each linkage mechanism (2.41, 2.42, 2.43) is a connecting rod-crank mechanism and comprises a connecting rod (2.410, 2.420, 2.430) attached to the motor assembly (2.1) and a crank (2.411, 2.421, 2.431) attached to the actuating element (1.1, 1.2).

7. Packaging machine according to claim 6, wherein the length of the connecting rods (2.410, 2.420) of the first linkage mechanism (2.41) and of the second linkage mechanism (2.42) is the same, and wherein the length of the cranks (2.411, 2.421) of the first linkage mechanism (2.41) and of the second linkage mechanism (2.42) is the same.

8. Packaging machine according to claim 6 or 7, wherein the length of all connecting rods (2.410, 2.420, 2.430) of the linkage mechanisms (2.41, 2.42, 2.43) is the same, and wherein the length of all cranks (2.411, 2.421, 2.431) of the linkage mechanisms (2.41, 2.42, 2.43) is the same.

9. Packaging machine according to any of claims 1 to 8, wherein the drive (2) comprises a guiding assembly (2.6) configured to guide the displacement of the actuating element (1.1, 1.2) with respect to the reference support (101), said actuating element (1.1, 1.2) being attached to said guiding assembly (2.6) with freedom of displacement.

10. Packaging machine according to claim 9, wherein the guiding assembly (2.6) comprises a guide (2.60) extending along the direction of travel of the actuating element (1.1, 1.2) and a guiding element (2.61) associated with the actuating element (1.1, 1.2), said guiding element (2.61) cooperating with said guide (2.60) during the displacement of said actuating element (1.1) caused by the motor assembly (2.1).

11. Packaging machine according to claim 9 or 10, wherein the guide (2.60) of the guiding assembly (2.6) is fixed to the reference support (101).

12. Packaging machine according to any of claims 1 to 11, wherein at least one of the elements of the motor assembly (2.1) between the stator (2.10) and the rotor (2.11) is attached to the reference support (101), wherein said connection establishes the connection between the motor assembly (2.1) and the reference support (101) and wherein said element is attached to said reference support (101) with freedom of rotation.

13. Packaging machine according to any of claims 1 to 11, wherein the rotor (2.11) of the motor assembly (2.1) is freely rotatably attached to the reference support (101) and the stator of the motor assembly (2.1) is freely rotatably attached to the reference support (101).

14. Packaging machine according to claim 12 or 13, wherein the element of the motor assembly (2.1) between the stator (2.10) and the rotor (2.10) which is connected to the reference support (101) with freedom of rotation, is connected to the reference support (101) by means of a bearing (2.7, 2.8).

15. Packaging machine according to any of claims 1 to 14, comprising an actuation assembly (1) with a first drive (2) and a second drive (2).

## Patentansprüche

1. Verpackungsmaschine, umfassend eine Betätigungsbaugruppe (1), wobei die Betätigungsbaugruppe (1) dazu konfiguriert ist, an einem Vorgang beim Verpacken von Produkten teilzunehmen und einem Referenzträger (101) der Maschine (100) zugeordnet ist, wobei die Betätigungsbaugruppe (1) mindestens ein Betätigungselement (1.1), das in Bezug auf den Referenzträger (101) linear verschiebbar ist, und mindestens einen Antrieb (2) umfasst, der dazu konfiguriert ist, die lineare Verschiebung des Betätigungselements (1.1) zu bewirken, wobei der Antrieb (2) eine Motorbaugruppe (2.1) umfasst, die mit dem Referenzträger (101) verbunden ist und die dem Betätigungselement (1.1) zugeordnet ist, so dass, wenn die Motorbaugruppe (2.1) angetrieben wird, die Motorbaugruppe (2.1) die lineare Verschiebung des Betätigungselements (1.1) bewirkt, **dadurch gekennzeichnet, dass** der Antrieb (2) einen ersten Gestängemechanismus (2.41), der das Betätigungselement (1.1) mit einem Rotor (2.11) der Motorbaugruppe (2.1) verbindet, und einen zweiten Gestängemechanismus (2.42) umfasst, der das Betätigungselement (1.1) mit einem Stator (2.10) der Motorbaugruppe (2.1) verbindet, wobei die Motorbaugruppe (2.1) an dem Referenzträger (101) angebracht ist, so dass, wenn die Motorbaugruppe (2.1) angetrieben wird, der Stator (2.10) und der Rotor (2.11) sich in Bezug auf den Referenzträger (101) in entgegengesetzten Drehrichtungen drehen und diese Drehungen die lineare Verschiebung des Betätigungselements (1.1) bewirken.

2. Verpackungsmaschine nach Anspruch 1, wobei das Betätigungselement (1.1) in einer ersten Richtung und in einer zweiten, der ersten Richtung entgegengesetzten Richtung linear verschiebbar ist, wobei die beiden Gestängemechanismen (2.41, 2.42) dazu konfiguriert sind, einen gleichzeitigen Schub (F2.10, F2.11) auf das Betätigungselement (1.1) in der gleichen Richtung zwischen der ersten Richtung und der zweiten Richtung auszuüben, wenn die Motorbaugruppe (2.1) angetrieben wird.

3. Verpackungsmaschine nach Anspruch 1, wobei die Betätigungsbaugruppe (1) ein zweites Betätigungselement (1.2) umfasst, das linear verschiebbar und dem ersten Betätigungselement (1.1) zugewandt ist, wobei der Antrieb (2) dazu konfiguriert ist, eine gleichzeitige Verschiebung der beiden Betätigungselemente (1.1, 1.2) zu bewirken, und wobei der Antrieb (2) einen dritten Gestängemechanismus (2.43) umfasst, um das zweite Betätigungselement (1.2) mit dem Stator (2.10) oder dem Rotor (2.11) der Motorbaugruppe (2.1) des Antriebs (2) zu verbinden.

4. Verpackungsmaschine nach Anspruch 3, wobei das erste Betätigungselement (1.1) in einer ersten Richtung und in einer zweiten Richtung, die der ersten Richtung entgegengesetzt ist, linear verschiebbar ist, wobei die beiden Gestängemechanismen (2.41, 2.42) dazu konfiguriert sind, einen Schub (F2,10, F.211) gleichzeitig auf das Betätigungselement (1.1) in derselben Richtung zwischen der ersten Richtung und der zweiten Richtung auszuüben, wenn die Motorbaugruppe (2.1) angetrieben wird, und der dritte Gestängemechanismus (2.43) dazu konfiguriert ist, einen Schub auf das zweite Betätigungselement (1.2) in der zur Richtung der auf das erste Betätigungselement (1.1) ausgeübten Schübe (F2.10, F2.11) entgegengesetzten Richtung auszuüben, wenn die Motorbaugruppe (2.1) angetrieben wird.

5. Verpackungsmaschine nach Anspruch 3 oder 4, wobei der dritte Gestängemechanismus (2.43) das zweite Betätigungselement (1.2) mit dem Rotor (2.11) der Motorbaugruppe (2.1) des Antriebs (2) verbindet.

6. Verpackungsmaschine nach einem der Ansprüche 1 bis 5, wobei jeder Gestängemechanismus (2.41, 2.42, 2.43) ein Pleuelstangen-Kurbelmechanismus ist und eine an der Motorbaugruppe (2.1) angebrachte Pleuelstange (2.410, 2.420, 2.430) und eine an dem Betätigungselement (1.1, 1.2) angebrachte Kurbel (2.411, 2.421, 2.431) umfasst.

7. Verpackungsmaschine nach Anspruch 6, wobei die Länge der Pleuelstangen (2.410, 2.420) des ersten Gestängemechanismus (2.41) und des zweiten Gestängemechanismus (2.42) gleich ist, und wobei die Länge der Kurbeln (2.411, 2.421) des ersten Gestängemechanismus (2.41) und des zweiten Gestängemechanismus (2.42) gleich ist.

8. Verpackungsmaschine nach Anspruch 6 oder 7, wobei die Länge aller Pleuelstangen (2.410, 2.420, 2.430) der Gestängemechanismen (2.41, 2.42, 2.43) gleich ist, und wobei die Länge aller Kurbeln (2.411, 2.421, 2.431) der Gestängemechanismen (2.41, 2.42, 2.43) gleich ist.

9. Verpackungsmaschine nach einem der Ansprüche 1 bis 8, wobei der Antrieb (2) eine Führungsbaugruppe (2.6) umfasst, die dazu konfiguriert ist, die Verschiebung des Betätigungselements (1.1, 1.2) in Bezug auf den Referenzträger (101) zu führen, wobei das Betätigungselement (1.1, 1.2) an der Führungsbaugruppe (2.6) mit Verschiebungsfreiheit angebracht ist.

10. Verpackungsmaschine nach Anspruch 9, wobei die Führungsbaugruppe (2.6) eine Führung (2.60), die sich entlang der Bewegungsrichtung des Betätigungselements (1.1, 1.2) erstreckt, und ein dem Betätigungselement (1.1, 1.2) zugeordnetes Führungselement (2.61) umfasst, wobei das Führungselement (2.61) mit der Führung (2.60) während der durch die Motorbaugruppe (2.1) verursachten Verschiebung des Betätigungselements (1.1) zusammenwirkt.

11. Verpackungsmaschine nach Anspruch 9 oder 10, wobei die Führung (2.60) der Führungsbaugruppe (2.6) am Referenzträger (101) fixiert ist.

12. Verpackungsmaschine nach einem der Ansprüche 1 bis 11, wobei mindestens eines der Elemente der Motorbaugruppe (2.1) zwischen dem Stator (2.10) und dem Rotor (2.11) an dem Referenzträger (101) angebracht ist, wobei die Verbindung die Verbindung zwischen der Motorbaugruppe (2.1) und dem Referenzträger (101) festlegt und wobei das Element an dem Referenzträger (101) mit Drehfreiheit angebracht ist.

13. Verpackungsmaschine nach einem der Ansprüche 1 bis 11, wobei der Rotor (2.11) der Motorbaugruppe (2.1) frei drehbar an dem Referenzträger (101) angebracht ist und der Stator der Motorbaugruppe (2.1) frei drehbar an dem Referenzträger (101) angebracht ist.

14. Verpackungsmaschine nach Anspruch 12 oder 13, wobei das Element der Motorbaugruppe (2.1) zwischen dem Stator (2.10) und dem Rotor (2.10), das mit dem Referenzträger (101) drehbar verbunden ist, über ein Lager (2.7, 2.8) mit dem Referenzträger (101) verbunden ist.

15. Verpackungsmaschine nach einem der Ansprüche 1 bis 14, umfassend eine Betätigungsbaugruppe (1) mit einem ersten Antrieb (2) und einem zweiten Antrieb (2).

## Revendications

1. Machine d'emballage comprenant un ensemble d'actionnement (1), l'ensemble d'actionnement (1) étant configuré pour prendre part à une opération lors de l'emballage de produits et étant associé à un support de référence (101) de la machine (100), l'ensemble d'actionnement (1) comprenant au moins un élément d'actionnement (1.1) déplaçable linéairement par rapport au support de référence (101) et au moins un entraînement (2) configuré pour provoquer ledit déplacement linéaire de l'élément d'actionnement (1.1), l'entraînement (2) comprenant un ensemble moteur (2.1) qui est solidaire du support de référence (101) et qui est associé audit élément d'actionnement (1.1) de telle sorte que, lorsque l'ensemble moteur (2.1) est entraîné, ledit ensemble moteur (2.1) provoque le déplacement linéaire dudit élément d'actionnement (1.1), **caractérisée en ce que** l'entraînement (2) comprend un premier mécanisme de liaison (2.41) reliant l'élément d'actionnement (1.1) à un rotor (2.11) de l'ensemble moteur (2.1), et un second mécanisme de liaison (2.42) reliant ledit élément d'actionnement (1.1) à un stator (2.10) dudit ensemble moteur (2.1), l'ensemble moteur (2.1) étant fixé au support de référence (101) de telle sorte que, lorsque ledit ensemble moteur (2.1) est entraîné, le stator (2.10) et le rotor (2.11) tournent par rapport au support de référence (101) dans des sens de rotation opposés et lesdites rotations provoquent le déplacement linéaire de l'élément d'actionnement (1.1).

2. Machine d'emballage selon la revendication 1, dans laquelle l'élément d'actionnement (1.1) est déplaçable linéairement dans une première direction et dans une seconde direction opposée à ladite première direction, les deux mécanismes de liaison (2.41, 2.42) étant configurés pour exercer une poussée simultanée (F2.10, F2.11) sur ledit élément d'actionnement (1.1) dans une même direction, entre ladite première direction et ladite seconde direction, lorsque l'ensemble moteur (2.1) est entraîné.

3. Machine d'emballage selon la revendication 1, dans laquelle l'ensemble d'actionnement (1) comprend un second élément d'actionnement (1.2) déplaçable linéairement et faisant face au premier élément d'actionnement (1.1), l'entraînement (2) étant configuré pour provoquer le déplacement simultané des deux éléments d'actionnement (1.1, 1.2), et ledit entraînement (2) comprenant un troisième mécanisme de liaison (2.43) pour relier le second élément d'actionnement (1.2) au stator (2.10) ou au rotor (2.11) de l'ensemble moteur (2.1) de l'entraînement (2).

4. Machine d'emballage selon la revendication 3, dans laquelle le premier élément d'actionnement (1.1) est déplaçable linéairement dans une première direction et dans une seconde direction opposée à ladite première direction, les deux mécanismes de liaison (2.41, 2.42) étant configurés pour exercer une poussée (F2.10, F2.11) simultanément sur ledit élément d'actionnement (1.1) dans une même direction, entre ladite première direction et ladite seconde direction, lorsque l'ensemble moteur (2.1) est entraîné, et le troisième mécanisme de liaison (2.43) étant configuré pour exercer une poussée sur le second élément d'actionnement (1.2) dans la direction opposée à la direction des poussées (F2.10, F2.11) exercées sur le premier élément d'actionnement (1.1), lorsque l'ensemble moteur (2.1) est entraîné.

5. Machine d'emballage selon la revendication 3 ou 4, dans laquelle le troisième mécanisme de liaison (2.43) relie le second élément d'actionnement (1.2) au rotor (2.11) de l'ensemble moteur (2.1) de l'entraînement (2).

6. Machine d'emballage selon l'une quelconque des revendications 1 à 5, dans laquelle chaque mécanisme de liaison (2.41, 2.42, 2.43) est un mécanisme bielle-manivelle et comprend une bielle (2.410, 2.420, 2.430) fixée à l'ensemble moteur (2.1) et une manivelle (2.411, 2.421, 2.431) fixée à l'élément d'actionnement (1.1, 1.2).

7. Machine d'emballage selon la revendication 6, dans laquelle la longueur des bielles (2.410, 2.420) du premier mécanisme de liaison (2.41) et du second mécanisme de liaison (2.42) est identique, et dans laquelle la longueur des manivelles (2.411, 2.421) du premier mécanisme de liaison (2.41) et du second mécanisme de liaison (2.42) est identique.

8. Machine d'emballage selon la revendication 6 ou 7, dans laquelle la longueur de toutes les bielles (2.410, 2.420, 2.430) des mécanismes de liaison (2.41, 2.42, 2.43) est identique, et dans laquelle la longueur de toutes les manivelles (2.411, 2.421, 2.431) des mécanismes de liaison (2.41, 2.42, 2.43) est identique.

9. Machine d'emballage selon l'une quelconque des revendications 1 à 8, dans laquelle l'entraînement (2) comprend un ensemble de guidage (2.6) configuré pour guider le déplacement de l'élément d'actionnement (1.1, 1.2) par rapport au support de référence (101), ledit élément d'actionnement (1.1, 1.2) étant fixé audit ensemble de guidage (2.6) avec liberté de déplacement.

10. Machine d'emballage selon la revendication 9, dans laquelle l'ensemble de guidage (2.6) comprend un guide (2.60) s'étendant le long de la direction de déplacement de l'élément d'actionnement (1.1, 1.2) et un élément de guidage (2.61) associé à l'élément d'actionnement (1.1, 1.2), ledit élément de guidage (2.61) coopérant avec ledit guide (2.60) lors du déplacement dudit élément d'actionnement (1.1) provoqué par l'ensemble moteur (2.1).

11. Machine d'emballage selon la revendication 9 ou 10, dans laquelle le guide (2.60) de l'ensemble de guidage (2.6) est fixé au support de référence (101).

12. Machine d'emballage selon l'une quelconque des revendications 1 à 11, dans laquelle au moins un des éléments de l'ensemble moteur (2.1) parmi le stator (2.10) et le rotor (2.11) est fixé au support de référence (101), ladite fixation établissant la liaison entre l'ensemble moteur (2.1) et le support de référence (101), et dans laquelle ledit élément est fixé audit support de référence (101) avec liberté de rotation.

13. Machine d'emballage selon l'une quelconque des revendications 1 à 11, dans laquelle le rotor (2.11) de l'ensemble moteur (2.1) est fixé au support de référence (101) avec liberté de rotation et le stator de l'ensemble moteur (2.1) est fixé au support de référence (101) avec liberté de rotation.

14. Machine d'emballage selon la revendication 12 ou 13, dans laquelle l'élément de l'ensemble moteur (2.1) parmi le stator (2.10) et le rotor (2.10) qui est relié au support de référence (101) avec liberté de rotation est relié au support de référence (101) au moyen d'un palier (2.7, 2.8).

15. Machine d'emballage selon l'une quelconque des revendications 1 à 14, comprenant un ensemble d'actionnement (1) avec un premier entraînement (2) et un second entraînement (2).
